# EUROPEAN PATENT SPECIFICATION

(11) **EP 0 322 976 B1**
(45) Date of publication and mention of the grant of the patent: **18.02.1998**
(21) Application number: 88202986.1
(22) Date of filing: 20.12.1988
(51) Int. Cl.: C08G 67/02

(54) **Polymeric polyalcohols**
Polymere Polyalkohole
Polyalcools polymères

(30) Priority: 29.12.1987 US 138767; 29.07.1988 NL 8801908
(43) Date of publication of application: 05.07.1989
(73) Proprietor: SHELL INTERNATIONALE RESEARCH MAATSCHAPPIJ B.V., 2596 HR Den Haag (NL)
(72) Inventor: Wong, Pui, NL-1031 CM Amsterdam (NL); Drent, Eit, NL-1031 CM Amsterdam (NL); Smaardijk, Abraham Adriaan, NL-1031 CM Amsterdam (NL); Kramer, Arris Herman, NL-1031 CM Amsterdam (NL)

(56) References cited:
- DE-A- 2 600 431
- US-A- 2 495 292
- US-A- 4 513 117
- THE JOURNAL OF THE AMERICAN CHEMICAL SOCIETY, vol. 74, no. 1, 1952 BRUBAKER M. M. et al. "Synthesis and characteriza- tion of ethylene/carbon monoxide copolymers, a new class of polyketones" pages 1509-1515

## Description

This invention relates to a process for the preparation of a polymeric polyalcohol by the reduction of a polymer of carbon monoxide and one or more olefinically unsaturated compounds, and to the novel polymeric polyalcohols obtainable by such a process.

Polymeric polyalcohols are known. For instance, it is known to prepare polyvinylalcohols by hydrolysis or saponification of polyvinylacetates, and the resulting polymer chains are built of alternating units of methylene and hydroxymethylene. It is also known, e.g. from US-2495292, DE-A-2600431 or JP-A-54.100194, to reduce copolymers of carbon monoxide and ethene, in which the molar ratio of the CO units to the C₂H₄ units generally is below 1 (often as low as 0.001), and in which the CO units do not alternate with the ethylene units. The products of the latter reduction are, as a result, polyethylene molecules having CHOH groups at irregular distances. Such irregular polymeric polyalcohols will be designated as "molecularly impure" hereinafter, where the molecular purity is intended to mean the extent to which the polymer consists of repeating units of general formula --CH(OH)--(A)-- wherein A is the moiety of the olefinically unsaturated compound polymerized through the olefinic unsaturation.

The polyvinyl alcohols have useful properties, but present disadvantages in being somewhat expensive and having a lesser thermal stability. The latter is due to their particular structure, which causes, through elminination of water, the creation of a system of conjugated double bonds (also known as a polyacetylene).

Thus there is a need for polyalcohols which do not allow the formation of a system of conjugated double bonds. Starting from the idea that the introduction of ethylene or substituted ethylene groups in stead of the methylene groups would preclude such a reaction, Applicant has carried out an investigation into the hydrogenation of linear, alternating polymers of carbon monoxide and one or more olefinically unsaturated compounds, also known as polyketones. However, earlier research had shown that such hydrogenation does not always lead to attractive products.

In general, when copolymers of carbon monoxide and ethylene of low molecular purity are subjected to hydrogenation, either catalytic or stoichiometric, the resulting polyol is of less desirable properties due in part to the absence of crystallinity, it was found.

Likewise, Applicant initially obtained disappointing results when hydrogenating copolymers of carbon monoxide and olefinically unsaturated compounds through catalytic hydrogenation processes, analogous to processes which are known to be effective for quantitatively converting monoketones such as acetone into secondary alcohols. In some cases no reaction took place, in other cases some reaction occurred but yielding a complex mixture of polymers in which the alternating character of the starting material had disappeared completely.

One of the investigated catalyst compositions caused a CO/C₂H₄ alternating copolymer to be converted into a linear polymer in which ethylene groups and 2,5-tetrahydrofurandiyl groups alternated. Apparently a combination of hydrogenation and dehydrogenation with ring closure takes place in the presence of that catalyst.

Surprisingly it was now found that the carbonyl groups of the afore defined polyketones can be converted, at least in part, to secondary alcohol groups, by contacting in a diluent with a metal hydride of the general formula XYH₄, or a catalytic composition derived thereof, in which X stands for lithium, sodium or potassium, and Y represents aluminium or boron, and that a product with a high molecular purity can be obtained. It further appeared that by starting from a polyketone which was prepared by copolymerizing the monomers with a catalyst composition based on a metal of Group 8, an anion of a non-hydrohalogenic acid having a pKa below 6 and a bidentate ligand of phosphorus, arsenic or antimony, a polymeric polyalcohol can be prepared which comprises 1,2-glycol moieties in a quantity below the detection level.

The invention therefore relates to new polymeric alcohols, characterised by consisting of for at least 90% of repeating units of the general formula -[-CH(OH)-CH₂-CH(R)-]- which units may be the same or different and wherein each R stands for a hydrogen atom or a hydrocarbyl group of up to 12 carbon atoms, and by containing less than 0.5% of 1,2-glycol moieties.

The phrase "consisting for at least 90%" means that the polyalcohols should be at least 90% molecularly pure, as herebefore defined.

The polymeric polyalcohols according to the invention possess a linear structure, and the hydroxymethylene units alternate with the ethylene or substituted ethylene units.

Like in the polyketones from which they are made, the substituted R need not be the same in all units. If it is, a copolymer is formed, if it is not, a terpolymer, quaterpolymer and so on.

Preferably the olefinically unsaturated compound is a hydrocarbon, especially of up to 12 carbon atoms, in particular an alkene, e.g. ethene, propene, butene, hexene-1, octene-1, or an aryl substituted alkene, e.g. styrene or p-methylstyrene.

The group R thus preferably represents a hydrogen atom, a methyl group or a phenyl group. Preferred terpolymers are those wherein R is a hydrogen atom in some units and a methyl or a phenyl group in others, the molar ratio of units containing methyl or phenyl groups to units containing hydrogen atoms being below 0.5. Of particular interest are the polyketone polymers of molecular weight from about 450 to about 200,000, especially those of molecular weight from 10,000 to 50,000.

The hydrogenation process of the present invention provides a high rate of conversion of the carbonyl groups, together with a high rate of retention of linearity and alternating character of the chains.

In some embodiments molecular purities of 90% or more, even 95-97% are reached. This contrasts with known hydrogenations of similar but non-alternating linear copolymers of carbon monoxide and ethene. The starting materials can be obtained by processes now becoming conventional, such as described in EP-121965, EP-181014 or EP-222454. The process typically involves contacting carbon monoxide and the olefinically unsaturated compound or compounds at slightly elevated pressure and temperature with a catalyst composition based on a metal from Group 8, e.g. palladium, the anion of a non-hydrohalogenic acid having a pKa below 6 and a bidentate ligand of phosphorus, arsenic or antimony.

The diluent in which the hydrogenation process is carried out, is preferably a liquid diluent, especially one in which the prepared polymeric polyalcohol and/or the starting polyketone dissolve. Examples of liquids in which the starting polyketones dissolve, are m-cresol or hexafluoroisopropanol, especially the latter, which allows the reaction to proceed with high yield, at ambient temperatures and pressure, e.g. in the range of 15 to 40 °C, and at atmospheric pressure. Solvents for the formed polyalcohols are preferably mono- or polyhydric alcohols or ethers alcohol ethers having up to 6 carbon atoms, such as methanol or ethanol, ethanediol (ethylene glycol) or glycol ethers, e.g. the monomethyl ether of ethylene glycol, or cyclic ethers, e.g. tetrahydrofuran. Methanol is particularly preferred. When using the latter solvents, it is advantageous to apply conditions of elevated temperature and pressure, that is, in the range of 100-200 °C and 10-200 bar, in particular, at 120-180 °C and 40-100 bar. When carrying out the present reaction in methanol at mild conditions of temperature and pressure, using e.g. sodium borohydride as reducing agent, the reaction does proceed, but the product will contain only about 40-60% of reduced carbonyl groups.

It was found that the yield in this case could be improved, by employing a catalytic composition derived from XYH₄, and adding hydrogen gas.

Thus a preferred way of carrying out the present hydrogenation process, consists in using a catalytic composition obtainable by reacting the metal hydride XYH₄ with a nickel compound, in particular a nickel salt such as nickel acetate, in the presence of hydrogen gas. Other suitable nickel compounds are nickel chloride, nickel sulphide, nickel propionate, and nickel acetylacetonate. They are suitably used in a proportion of at least one mole per mole of polyketone.

The preferred compounds of general formula XYH₄ are sodium borohydride and lithium aluminiumhydride. The amount of metal hydride to be used is advantageously at least stoichiometric with respect to the polyketone polymer. Although the stoichiometry of a reaction involving a polymeric material is often difficult to determine, good results are obtained if at least 1.5 gram, preferably at least 2 gram, of sodium borohydride is employed for each gram of polyketone to be reduced. Use of a stoichiometric excess of sodium borohydride, even a substantial stoichiometric excess, is not detrimental to the reduction process but is often unnecessary. Subsequent to reaction the polymeric polyalcohol is recovered as by solvent removal through evaporation or distillation or by precipitation of the polyalcohol with a material which is miscible with the reaction diluent but which is a non-solvent for the polyalcohol, e.g., acetone. The polymeric polyalcohol product is used as such or is purified by conventional means including dissolving the polyalcohol in a hydroxylic solvent such as methanol and precipitating the polyalcohol through the addition of a non-solvent such as acetone.

The polyalcohol product is of high molecular purity. The polyalcohol is related to the family of polyvinylalcohol polymers and copolymers, but differing in the number of carbon atoms per hydroxyl group in the repeating polymer chain unit. The polyalcohol of the invention enjoys many of the same applications of the conventional polyvinylalcohol materials but somewhat greater stability because of the structural inability to degrade to conjugated dienes. The polyalcohol product is cast or extruded into films which are useful as adhesives and coatings for paper and shows some degree of barrier properties which make the polyalcohols useful in multi-layer laminates for wraps and containers for foods, drugs and cosmetics which normally undergo oxidative deterioration when exposed to air.

The invention is further illustrated by the following examples.

### EXAMPLE 1

(a) A linear alternating copolymer of carbon monoxide and ethylene was produced using a catalyst composition formed from palladium acetate, the anion of trifluoroacetic acid and 1,3-bis(diphenylphosphino)propane. The melting point of the polymer was 257°C and the limiting viscosity number (LVN) was 1.1 measured at 100° in m-cresol.
(b) A 10g sample of the polymer of paragraph (a) was dissolved in 250 ml of hexafluoroisopropanol and sufficient sodium borohydride, dissolved in ethanol, was added with stirring to provide 2.4g of sodium borohydride per gram of polymer. The mixture was maintained at ambient temperature overnight without stirring. Approximately 400 ml of water was added, followed by the slow addition of about 175 ml of concentrated hydrochloric acid, and then another 400 ml of water. The solution was evaporated to remove excess liquid and the insoluble polymeric polyalcohol precipitate was removed. The polymeric polyalcohol precipitate was then purified by repeated precipitation from methanol by the addition of acetone.

The polymer product was shown by NMR to be of the regular repeating formula 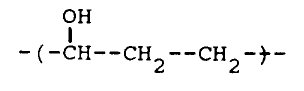 with no more than about 3-6% of the units being of any other structure. The observed molecular impurities were indicated by NMR to be of a substituted 2,5-tetrahydrofuran structure, likely obtained by internal condensation of the polyketone polymer. A periodic acid titration of the polyalcohol product showed no detectable amount (less than 0.5%) of 1,2-glycol moieties which would have come from reduction of a 1,2-diketone structure in the polyketone polymer reactant.

The polyalcohol product showed a melting point of 117°C. The product is somewhat crystalline with a slow rate of crystallization. It is readily soluble in methanol and slowly soluble in hot ethylene glycol. The polyalcohol product is insoluble in hot or cold water but is hydroscopic in air.

### EXAMPLE 2

When the general procedure of Example 1(b) was repeated, except that the reduction was conducted in hexafluoroisopropanol at reflux, a non-crystalline, rubbery material was obtained. The product contained a number of hydroxymethylene groups. This embodiment is less preferred.

### EXAMPLE 3

When the general procedure of Example 1(b) was repeated by adding an ethanolic solution of sodium borohydride to a suspension of polyketone in methanol, the conversion of carbonyl groups was from 40-66% depending upon the amount of excess sodium borohydride added. This embodiment is less preferred.

### EXAMPLE 4

(a) A copolymer of carbon monoxide and styrene was prepared as follows.

Into a magnetically stirred autoclave of 250 ml capacity a catalyst composition was introduced, comprising:
10 ml methanol
0.1 mmol palladium acetate
3 mmol 2,2'-bipyridine
2 mmol para-toluenesulphonic acid, and
10 mmol 1,4-benzoquinone.

Next 50 ml styrene was brought in the autoclave, followed by the introduction of carbon monoxide, until a pressure of 40 bar had been reached. Finally the contents were heated to 70 °C. After 5 hours the polymerization reaction was terminated by cooling down to room temperature and letting off the pressure. The polymer was filtered off, washed with methanol, and dried in vacuo at room temperature. Polymer yield was 24.0 g.

It was established by means of ¹³C-NMR analysis that the copolymer possessed a linear structure, and that in the chains the units originating from carbon monoxide alternated with the units originating from styrene. It was further established by ¹³C-NMR analysis that the polymerization had proceeded both in regiospecific and in stereospecific ways.

(b) A polymeric polyalcohol was prepared as follows. To a stirred solution of 5 g of the copolymer prepared under (a) in 30 ml of hexafluoroisopropanol, 2,8 g sodium borohydride was added. After 15 hours, 100 ml methanol were added to the reaction mixture. The precipitated polymeric polyalcohol was filtered off, washed with methanol and dried at 70 °C. From ¹³C-NMR analysis it appeared that 70% of the originally occurring carbonyl groups were present in the polymeric polyalcohol as secundary alcohol groups. Unlike the carbon monoxide/styrene polymers from which they had been prepared, the polymeric polyalcohols dissolved completely in tetrahydrofuran.

### EXAMPLE 5

A solution of 2 g of alternating oligomers of propene and CO, having molecular weights of 450 to 16,000, in 25 ml tetrahydrofuran was dropwise added to a stirred suspension of 1 g LiAlH₄ in 10 ml tetrahydrofuran.

After addition the mixture was refluxed for 18 hours. Water was added and the mixture was filtered. Chloroform was added, the organic layer separated, extracted with water, dried over MgSO₄ and filtered. The final product was obtained by evaporation of the solvent.

## Claims

1. Novel polymeric polyalcohols, characterised by consisting of for at least 90% repeating units of the general formula 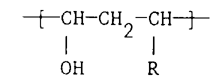 which units may be the same or different and wherein each R stands for a hydrogen atom or a hydrocarbyl group of up to 12 carbon atoms, and by containing less than 0.5% of 1,2-glycol moieties.

2. A polyalcohol as claimed in claim 1, characterised in that R is a hydrogen atom, a methyl group or a phenyl group.

3. A polyalcohol as claimed in claims 1 and 2, characterised in that R is a hydrogen atom in some units and a methyl or phenyl group in others, the molar ratio of units containing methyl or phenyl groups to units containing hydrogen atoms being below 0.5.

## Patentansprüche

1. Neue polymere Polyalkohole, dadurch gekennzeichnet, daß sie zu wenigstens 90 % aus wiederkehrenden Einheiten der allgemeinen Formel 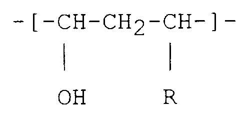 bestehen, welche Einheiten gleich oder verschieden sein können und worin jeder Rest R für ein Wasserstoffatom oder eine Hydrocarbylgruppe mit bis zu 12 Kohlenstoffatomen steht, und daß sie weniger als 0,5 % an 1,2-Glycoleinheiten enthalten.

2. Polyalkohol nach Anspruch 1, dadurch gekennzeichnet, daß R ein Wasserstoffatom, eine Methylgruppe oder eine Phenylgruppe bedeutet.

3. Polyalkohol nach den Ansprüchen 1 und 2, dadurch gekennzeichnet, daß R in einigen Einheiten ein Wasserstoffatom darstellt und in anderen Einheiten eine Methyl- oder Phenylgruppe bedeutet, wobei das Molverhältnis der Methyl- oder Phenylgruppen enthaltenden Einheiten zu den Wasserstoffatome enthaltenden Einheiten unter 0,5 liegt.

## Revendications

1. Nouveaux polyalcools polymériques, caractérisés en ce qu'ils sont constitués pour au moins 90% d'unités récurrentes de la formule générale 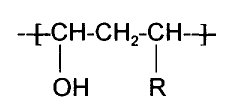 lesquelles unités peuvent être identiques ou différentes et dans lesquelles chaque symbole R représente un atome d'hydrogène ou un radical hydrocarbyle comptant jusqu'à 12 atomes de carbone et en ce qu'ils contiennent moins de 0,5% de groupements 1,2-glycol.

2. Polyalcool suivant la revendication 1, caractérisé en ce que R représente un atome d'hydrogène, un radical méthyle ou un radical phényle.

3. Polyalcool suivant les revendications 1 et 2, caractérisé en ce que R représente un atome d'hydrogène dans certaines unités et un radical méthyle ou phényle dans d'autres, le rapport molaire des unités contenant des radicaux méthyle ou phényle aux unités contenant des atomes d'hydrogène étant inférieur à 0,5.
